# EUROPÄISCHE PATENTSCHRIFT

(11) **EP 1 143 175 B1**
(45) Veröffentlichungstag und Bekanntmachung des Hinweises auf die Patenterteilung: **20.09.2006**
(21) Anmeldenummer: 01108688.1
(22) Anmeldetag: 06.04.2001
(51) Int. Cl.: F16J 15/32

(54) **Dichtung in nicht-hermetischer Ausführung**
Sealing in non-hermetic arrangement
Joint dans une réalisation non-hermétique

(30) Priorität: 08.04.2000 DE 10017643
(43) Veröffentlichungstag der Anmeldung: 10.10.2001
(73) Patentinhaber: MTU Aero Engines GmbH, 80995 München (DE)
(72) Erfinder: Beichl, Stefan, 82211 Herrsching (DE)

(56) Entgegenhaltungen:
- EP-A- 0 629 798
- EP-A- 0 933 567
- DE-A- 19 618 475

## Beschreibung

Die Erfindung betrifft eine Dichtung in nicht-hermetischer Ausführung für den Einbau zwischen zwei relativ zueinander beweglichen Bauteilen, insbesondere zwischen einem Rotor und einem Stator einer Turbomaschine, mit einer Vielzahl von biegeelastischen Dichtelementen, welche jeweils ein fest mit einem Dichtungsträger verbundenes Ende und ein freies, abgewinkeltes, mit der Spitze auf die Oberfläche des einen Bauteils gerichtetes Ende aufweisen, gemäß dem Oberbegriff des Patentanspruches 1.

Eine solche Dichtung ist aus der DE-A- 196 18 475 bekannt. Die biegeelastischen Dichtelemente sind als abgewinkelte Borsten ausgeführt, so dass es sich um eine spezielle Bauart einer Bürstendichtung handelt. Diese Bauart hat den Vorteil, dass bei ausreichender Borstenelastizität, d.h. ausreichender Biegelänge, besonders geringe Dichtungsabmessungen in Richtung der abgewinkelten Borstenabschnitte realisierbar sind. Bei einer Wellendichtung mit radial zur Wellenachse hin abgewinkelten Borstenenden bedeutet dies, dass die radiale Bauhöhe und somit der Durchmesser der Dichtung extrem klein ausführbar sind. Dieses Kriterium kann beispielsweise dann ausschlaggebend sein, wenn die Bürstendichtung als konstruktiver Ersatz für eine Labyrinthdichtung installiert werden soll, wobei ausreichend axialer aber wenig radialer Bauraum zur Verfügung steht. Im Falle einer Stirnflächenabdichtung werden die abgewinkelten Borstenenden axial ausgerichtet, wobei die erforderliche Biegelänge in radialer Richtung unterzubringen ist. Die Vorteile hinsichtlich minimalem Platzbedarf in einer Richtung, hier axial, sind offensichtlich. Die Fertigung derartiger "Haken-Bürstendichtungen" ist aber relativ aufwendig und teuer. Das liegt vor allem daran, dass eine Vielzahl von abgewinkelten Borsten, beispielsweise mehrere hundert von diesen, definiert an einem Träger ausgerichtet und dauerhaft befestigt werden müssen, wobei in der Regel auch eine Vielzahl von Borstenlagen über- bzw. nebeneinander erforderlich ist. Hinzu kommt, dass die feinen, abgewinkelten, meist metallischen Borsten sehr empfindlich sind und - ungewollt - leicht bleibend verformt oder abgebrochen werden können.

Aus der DE-C- 4403 605 ist es bekannt, als Dichtelemente biegeelastische Lamellen mit relativ großer Breite quer zur Bauteilbewegungsrichtung zu verwenden. Die Lamellen gleiten nach Art eines schräg angestellten Spachtels auf der Bauteiloberfläche bzw. auf einem dort dynamisch erzeugten Gaspolster. Eine nach diesem Prinzip ausgeführte Wellendichtung weist eine hohe Leckagerate auf, da die Axialspalte hinsichtlich Größe und Anzahl etwa den Lamellen entsprechen. Die Anordnung mehrerer, ggf. winkelversetzter Lamellenringe axial hintereinander kann hier nur teilweise Abhilfe schaffen. Daher konnte sich diese Bauart auch nicht gegenüber der Bürstendichtung durchsetzen.

Eine vergleichbare Dichtung mit biegeelastischen Lamellen mit großer Breite quer zur Bauteilbewegungsrichtung ist aus der EP-A-0 933 567 bekannt. Hinsichtlich der Nachteile dieser Bauart kann daher auf die voranstehenden Aussagen verwiesen werden.

Aus der EP-A-0 629 798 ist eine Dichtung in nicht-hermetischer Ausführung für den Einbau zwischen zwei relativ zueinander beweglichen Bauteilen, insbesondere zwischen einem Rotor und einem Stator, bekannt. Diese weist eine Vielzahl von biegeelastischen Dichtelementen auf, welche jeweils ein fest mit einem Dichtungsträger verbundenes Ende und ein abgewinkeltes Ende besitzen, wobei der Dichtungsträger die abgewinkelten Enden der Dichtelemente zumindest einseitig abstützt. Die federblattartigen Dichtelemente liegen zunächst flächig auf dem gegenüberstehenden Bauteil, insbesondere dem Rotor, auf, wobei ihre abgewinkelten Enden etwa rechtwinkelig von der Bauteiloberfläche weg gerichtet sind und an einer Wand des Dichtungsträgers beweglich anliegen. Mit zunehmender Bewegung/Rotation des benachbarten Bauteils heben die Dichtelemente aerodynamisch bzw. hydrodynamisch von der Bauteiloberfläche ab und "schwimmen" auf einem Fluidpolster. Bei geringer Relativbewegung neigt diese Bauart zu Reibung und Verschleiß, bei starker Relativbewegung und hydrodynamischem Auftrieb nehmen die Leckageverluste deutlich zu. Es ist schwierig, hier im Betrieb einen günstigen Kompromiss zu finden.

Angesichts dieses Standes der Technik und seiner Nachteile besteht die Aufgabe der Erfindung darin, eine Dichtung in nicht-hermetischer Ausführung mit einer Vielzahl biegeelastischer, abgewinkelter Dichtelemente zu schaffen, welche in Relation zu einer vergleichbaren Bürstendichtung einfacher und preiswerter in der Herstellung sowie robuster im Betrieb ist.

Diese Aufgabe wird durch die im Patentanspruch 1 gekennzeichneten Merkmale gelöst, in Verbindung mit den gattungsbildenden Merkmalen in dessen Oberbegriff. Anstelle von Borsten werden dünnwandige, abgewinkelte Federblätter verwendet, welche in mindestens zwei Lagen übereinander mit wechselseitiger Überlappung angeordnet sind. Dadurch wird zunächst die Anzahl der Dichtelemente ganz erheblich reduziert. Bei genauer Fertigung der Dichtelemente und des Dichtungsträgers führt die Integration dieser Teile relativ einfach und schnell zu der gewünschten Dichtungsgeometrie. Eine Fehlorientierung von Dichtelementen - wie bei "Hakenborsten" - ist praktisch ausgeschlossen. Der Aufwand für Nacharbeit wird sicher deutlich geringer. Es ist auch zu erwarten, dass die "Federblatt"-Dichtelemente in der Handhabung, z.B. bei Dichtungsmontage und -demontage, sowie im Betrieb wesentlich unempfindlicher hinsichtlich plastischer Deformation und Bruch sind, als Borsten, und daher auch höhere Differenzdrücke ertragen. Inwieweit hinsichtlich Leckage- und Verschleißverhalten Unterschiede zu vergleichbaren Bürstendichtungen bestehen, müssen Versuche zeigen.

In den Unteransprüchen sind bevorzugte Ausgestaltungen der Dichtung gekennzeichnet.

Die Erfindung wird anschließend anhand der Zeichnungen noch näher erläutert. Dabei zeigen in vereinfachter, nicht maßstäblicher Darstellung:
Figur 1 einen Axial-/Radialschnitt durch eine Dichtung zwischen einem Rotor und einem Stator, und
Figur 2 einen Teil-Querschnitt gemäß dem Schnittverlauf I ÷ I in Figur 1.

Die Dichtung 1 stellt eine nicht-hermetische Fluiddichtung zwischen einem Rotor 2 und einem Stator 3 einer Turbomaschine, z.B. eines Gasturbinentriebwerks, dar. Insofern weist die Dichtung 1 eine rotationssymmetrische, den Rotor 2 ringförmig umschließende Gestalt auf. Die wesentlichen Teile der Dichtung 1 sind die Dichtelemente 4,5 und der Dichtungsträger 8, wobei letzterer über eine geeignete Passung fest, zentrisch, dicht und wieder lösbar mit dem Stator 3 verbunden ist. Die federblattartigen Dichtelemente 4,5 sind ihrerseits fest mit dem Dichtungsträger 8 verbunden - hier im Bereich ihrer linken, horizontalen Enden -, beispielsweise durch Schweißen, Löten, Kleben, Nieten oder Kombinationen hiervon.

Die Dichtelemente 4,5 weisen freie, zum Rotor 2 hin abgewinkelte Enden 6,7 auf, welche zumindest einseitig gegenüber größeren Druckdifferenzen abgestützt sind. Die rechte Stützlippe 10 wird wirksam, wenn auf der linken Seite der Enden 6,7 ein deutlich höherer Betriebsdruck herrscht, wobei die radiale Beweglichkeit der Enden 6,7 senkrecht zur Oberfläche des Rotors 2 möglichst wenig reduziert werden sollte. Die Abstützung sollte also reibungsarm sein. Strichpunktiert ist ein modifizierter Dichtungsträger 9 dargestellt, welcher die Enden 6,7 der Dichtelemente 4,5 mittels einer Stützlippe 11 von links, d.h. gegen Überdruck von rechts, abstützt. Falls im Betrieb der Dichtung 1 relevante Druckgefälle in beide Richtungen zu erwarten sind, ist eine beidseitige Abstützung der Enden 6,7 sinnvoll, beispielsweise in Form eines aus den beiden Dichtungsträgern 8,9 zusammengesetzten Dichtungsträgers mit Stützlippen 10 und 11. Als Werkstoff für die Dichtelemente 4,5 und die Dichtungsträger 8,9 kommen Metalle und Kunststoffe, auch faserverstärkte, in Betracht. Keramische Werkstoffe sind primär als temperatur- bzw. verschleißfeste Beschichtungen geeignet und erst sekundär für ganze Bauteile. Für die Dichtelemente 4,5 können evtl. "Glasmetalle", d.h. amorphe Metalllegierungen, vorteilhaft sein. Auch weitgehend beliebige Kombinationen der genannten Werkstoffe sind möglich.

Die Dichtelemente 4,5 können als separate Teile gefertigt sein und erst am Dichtungsträger 8,9 verbunden werden, oder es können mehrere Dichtelemente aus einem flächigen, dünnwandigen Teil herausgearbeitet werden, indem das Teil von einer Seite her mehrfach geschlitzt wird, und die freien Enden der dabei entstehenden, zusammenhängenden Zungen abgewinkelt werden. Letztlich ergibt sich somit ein kammartiges, integrales Teil mit mehreren, abgewinkelten Dichtelementen. Das kammartige Teil kann großteils eben oder teilkreisförmig gekrümmt sein. Aus relativ wenigen solcher Teile und einem Dichtungsträger lässt sich dann die gewünschte Dichtung fügen. Diese Bauweise ist für den Fachmann leicht verständlich und deshalb nicht gesondert dargestellt.

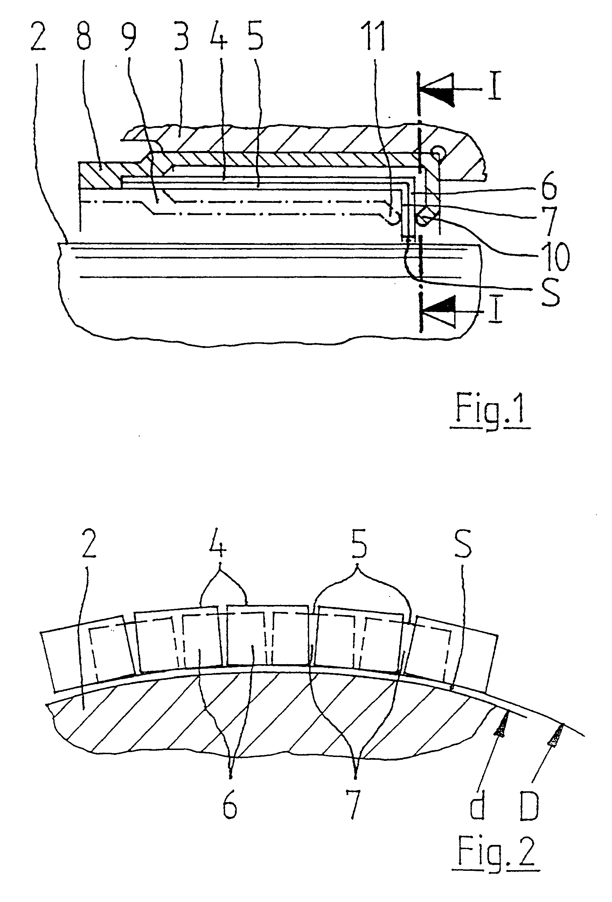

Figur 2 zeigt einen Teilquerschnitt - gemäß dem Verlauf 1 ÷ I in Figur 1 - durch die Dichtung 1, wobei der besseren Übersichtlichkeit halber nur die Dichtelemente 4,5 und der Rotor 2 wiedergegeben sind. Man erkennt zum einen die zweischichtige Anordnung, wobei die Dichtelemente 4 die äußere, die Dichtelemente 5 die innere Schicht bilden. Entsprechend liegen in dieser Ansicht die abgewinkelten Enden 6 der Dichtelemente 4 vorne, die Enden 7 der Dichtelemente 5 dahinter. Zum anderen wird die wechselweise Überlappung der äußeren und inneren Dichtelemente 4,5 deutlich, ebenso wie die Lage der Spalte bzw. Schlitze zwischen den jeweils benachbarten Dichtelementen. Die zum Rotor 2 weisenden Kanten der abgewinkelten Enden 6,7 tangieren bzw. bilden eine Kreislinie, deren Durchmesser D etwa dem Außendurchmesser d des Rotors 2 entspricht. Der sich ergebende Spalt S kann im Extremfall "Null" sein, das heißt, die Kanten der Dichtelemente 4,5 liegen gleitend auf der Rotoroberfläche auf. Im Hinblick auf weitgehende Verschleißfreiheit wird aber meist ein kleiner, definierter Spalt S konstruktiv vorgegeben sein. Für eine hohe Maßhaltigkeit der Dichtung 1 wird es sinnvoll sein, die rotorseitigen Kanten der Enden 6,7 feinzubearbeiten, z.B. durch Überschleifen auf den gewünschten Nenn-Innendurchmesser D.

Ausgehend von der rotationssymmetrischen, ringförmigen Bauweise der Dichtung 1 gemäß Figur 1 und 2 ist es naheliegend, eine erfindungsgemäße Dichtung auch für ebene Bauteile zu fertigen. Dazu wird der kreisförmig gebogene, in sich geschlossene Dichtungsträger durch einen geraden, leistenförmigen Dichtungsträger endlicher Länge ersetzt. Die Dichtelemente werden auch an diesem mindestens zweilagig mit wechselweiser Überlappung befestigt, wobei die Dichtkanten ihrer abgewinkelten Enden in einer Ebene zu liegen kommen. Man denke sich hierzu in Figur 2 die beiden Durchmesser d und D bis zum Wert "Unendlich" vergrößert, so dass aus den koaxialen Kurven parallele Geraden werden.
Die Dichtung 1 gemäß Figur 1 und 2 stellt de facto eine Axialdichtung mit Druckdifferenz in Axialrichtung dar. Ebenso kann die Erfindung in einer rotationssymmetrischen Radialdichtung realisiert werden, beispielsweise um Stirnflächen an Rotoren abzudichten. Dabei sind die abgewinkelten Enden der Dichtelemente entsprechend axial anzuordnen.
Neben ebenen und rotationssymmetrischen Bauformen sind auch andere Ausführungen denkbar, beispielsweise mehreckige oder beliebige gekrümmte Formen in geschlossener oder offener Anordnung. All diese sind dem Fachmann geläufig und daher nicht gesondert dargestellt.
Kinematisch gesehen ist die Erfindung bei dynamischen Dichtungen ebenso wie bei quasistatischen Dichtungen verwendbar, das heißt, sie ist für kleine, sporadische, langsame Relativbewegungen ebenso brauchbar wie für schnelllaufende Rotoren in einem Stator.
Die Dichtkanten der federelastischen Dichtelemente können schleifend/gleitend auf einer Bauteiloberfläche aufliegen, sie können aber auch - zumindest im Nennbetrieb - berührungslos arbeiten.
Des weiteren könnten die abgewinkelten, freien Enden der Dichtelemente in eine Nut eines Bauteils eingreifen, so dass der dabei erzielbare Labyrintheffekt die Dichtwirkung erhöht.
Bei rotationssymmetrischen Dichtungen mit kleinen Durchmessern kann es vorteilhaft sein, die abgewinkelten Enden zum Dichtspalt hin konisch zu verjüngen oder zu erweitern.

## Patentansprüche

1. Dichtung (1) in nicht-hermetischer Ausführung für den Einbau zwischen einem Rotor (2) und einem Stator (3) einer Turbomaschine, mit einer Vielzahl von biegeelastischen, als dünnwandige Federblätter ausgeführten Dichtelementen (4, 5), welche jeweils ein fest mit einem Dichtungsträger (8, 9) verbundenes Ende und ein freies, abgewinkeltes Ende (6, 7) aufweisen, wobei der Dichtungsträger (8, 9) fest mit dem Stator (3) verbunden ist und die abgewinkelten Enden (6, 7) der Dichtelemente (4, 5) zumindest einseitig abstützt, und wobei die Dichtelemente (4, 5) parallel nebeneinander sowie in mindestens zwei Lagen übereinander mit wechselweiser Überlappung angeordnet und zumindest vorwiegend axial orientiert sind, **dadurch gekennzeichnet, dass** die freien, abgewinkelten Enden (6, 7) der Dichtelemente (4, 5) auf die Oberfläche des Rotors (2) gerichtet sind, wobei die stirnseitigen Kanten der freien Enden (6, 7) in Umfangsrichtung des Rotors (2) verlaufen.

## Claims

1. Seal (1) in a non-hermetic embodiment for installation between a rotor (2) and a stator (3) of a turbo-engine, having a plurality of flexibly elastic sealing elements (4, 5) that are constructed as thin-walled spring leaves and in each case have one end that is fixedly connected to a seal carrier (8, 9) and a free, angled end (6, 7), with the seal carrier (8, 9) being fixedly connected to the stator (3) and supporting the angled ends (6, 7) of the sealing elements (4, 5) at least on one side, and with the sealing elements (4, 5) being arranged in parallel side by side and also in at least two layers one on top of the other with alternating overlapping and being oriented at least mainly axially, **characterised in that** the free, angled ends (6, 7) of the sealing elements (4, 5) are directed at the surface of the rotor (2), with the end edges of the free ends (6, 7) extending in the circumferential direction of the rotor (2).

## Revendications

1. Garniture d'étanchéité (1) réalisée sous forme non hermétique, destinée à être installée entre un rotor (2) et un stator (3) d'un turbomoteur, comportant une pluralité d'éléments de joint (4, 5) élastiques, qui sont conçus sous forme de lames de ressort de faible épaisseur et qui comportent chacun une extrémité reliée fermement à un porte-joint (8, 9) et une extrémité libre (6, 7) coudée, le porte-joint (8, 9) étant relié fermement au stator (3) et supportant au moins sur un côté les extrémités coudées (6, 7) des éléments de joint (4, 5), et les éléments de joint (4, 5) étant juxtaposés parallèlement et superposés en formant au moins deux couches à chevauchement alterné et étant orientés au moins principalement dans le sens axial, **caractérisée en ce que** les extrémités libres (6, 7) coudées des éléments de joint (4, 5) sont agencées sur la surface du rotor (2), les arêtes frontales des extrémités libres (6, 7) s'étendant dans le sens périphérique du rotor (2).
